(19) Europäisches Patentamt
European Patent Office
Office européen des brevets

(11) Veröffentlichungsnummer: **0 527 371 A2**

(12) **EUROPÄISCHE PATENTANMELDUNG**

(21) Anmeldenummer: **92112673.6**

(22) Anmeldetag: **24.07.92**

(51) Int. Cl.5: **C08G 18/02**, C08G 18/76, C08G 18/80, C08G 63/88

(30) Priorität: **09.08.91 DE 4126359**

(43) Veröffentlichungstag der Anmeldung: **17.02.93 Patentblatt 93/07**

(84) Benannte Vertragsstaaten: **AT BE CH DE DK ES FR GB IT LI NL PT SE**

(71) Anmelder: **BASF Aktiengesellschaft**
**Carl-Bosch-Strasse 38**
**W-6700 Ludwigshafen(DE)**

(72) Erfinder: **Scherzer, Dietrich, Dr.**
**Dr.-Semmelweis-Strasse 38**
**W-6730 Neustadt(DE)**
Erfinder: **Minges, Roland, Dr.**
**Auf der Setz 23**
**W-6718 Gruenstadt(DE)**
Erfinder: **Lehrich, Friedhelm, Dr.**
**Stoeltingstrasse 10**
**W-2844 Lemförde(DE)**
Erfinder: **Langer, Werner, Dr.**
**Wittelsbachstrasse 41**
**W-6700 Ludwigshafen(DE)**

(54) **Oligomere carbodiimide.**

(57) Oligomere Carbodiimide des mittleren Kondensationsgrades 2 bis 30, erhältlich durch Oligokondensation von

a) 40 bis 100 mol-% 2,4'-Diisocyanatodiphenylmethan oder eines 3,3',5,5'-Tetra-$C_1$-$C_4$-alkyl-4,4'-diisocyanatodiphenylmethans und

b) 0 bis 60 mol-% eines weiteren zwei- oder mehrfunktionellen aromatischen Isocyanates und c) gewünschtenfalls vollständige oder teilweise Umsetzung der noch freien Isocyanatgruppen der Oligomeren mit einem aliphatischen, araliphatischen oder cycloaliphatischen Alkohol oder Amin.

Diese Carbodiimide dienen vornehmlich zur Stabilisierung von estergruppenhaltigen polymeren Polyadditions- oder Polykondensationsprodukten gegen hydrolytischen Abbau.

EP 0 527 371 A2

Die vorliegende Erfindung betrifft oligomere Carbodiimide des mittleren Kondensationsgrades 2 bis 30, erhältlich durch Oligokondensation von

a) 40 bis 100 mol-% 2,4'-Diisocyanatodiphenylmethan oder eines 3,3',5,5'-Tetra-$C_1$-$C_4$-alkyl-4,4'-diisocyanatodiphenylmethans und

b) 0 bis 60 mol-% eines weiteren zwei- oder mehrfunktionellen aromatischen Isocyanates und

c) gewünschtenfalls vollständige oder teilweise Umsetzung der noch freien Isocyanatgruppen der Oligomeren mit einem aliphatischen, araliphatischen oder cycloaliphatischen Alkohol oder Amin.

Außerdem betrifft die Erfindung Verfahren zur Herstellung der oligomeren Carbodiimide, deren Verwendung als Wasser- und Säurefänger in hydrolyseempfindlichen Materialien und die mit diesen Carbodiimiden stabilisierten Materialien sowie deren Verwendung zum Abbruch von Veresterungsreaktionen, insbesondere im Falle der Herstellung von Polyesterolen.

Aus der US-A 2 941 983 sind oligomere und polymere Carbodiimide mit Urethanendgruppen auf der Basis von ein- oder zweikernigen aromatischen Diisocyanten bekannt, die als Antistatica für Polyestergewebe sowie zur Herstellung von Fasern, Folien und überzügen empfohlen werden.

Weiterhin sind aus der DE-A 22 48 751 oligomere und polymere Carbodiimide mit Urethangruppen auf Basis von solchen aromatischen Diisocyanaten bekannt, deren Isocyanatgruppen von unterschiedlicher Reaktivität sind. Man stellt sie her, indem man einen Teil der schneller reagierenden Isocyanatgruppen zunächst mit einem Alkohol in die entsprechende Urethangruppen überführt und danach die Carbodiimidbildung über die verbleibenden Isocyanatgruppen vornimmt. Diese Carbodiimide dienen als Stabilisatoren von Polyesterurethankautschuken gegen hydrolytischen Abbau, lassen in dieser Eigenschaft aber zu wünschen übrig.

Ferner finden auch niedermolekulare Carbodiimide, z.B. solche auf Basis von 2,6-Diisopropylphenylisocyanat, als Stabilisatoren für Polyesterurethankautschuke Verwendung (Kunststoff-Handbuch, Band 7, "Polyurethane", 2. Auflage (1983), Hanser-Verlag, Seite 408).

Produkte auf Basis von 2,6-Diisopropylphenylisocyanat neigen aufgrund ihres niedrigen Molekulargewichtes zum Ausblühen aus Polyurethankautschuken.

Nach der Lehre der DD-A 132 969 erhält man gegen Hydrolyse stabilere Polyesterurethane, wenn man die eingesetzten Polyesterole vor der Umsetzung zum Polyurethan zur Entfernung von Säurespuren mit Carbodiimiden oder Polycarbodiimiden behandelt. Als geeignete Verbindungen dieser Art werden mehrfach substituierte Diarylcarbodiimide wie 2,2',6,6'-Tetraisopropyldiphenylcarbodiimid genannt.

Der Erfindung lagen neue Oligocarbodiimide als Aufgabe zugrunde, die sich besser als die bisher bekannten Verbindungen dieser Art zur Stabilisierung von hydrolyseempfindlichen Substanzen, insbesondere von Estern und von Polymeren, z.B. Polyadditions- oder Polykondensationsprodukten die Estergruppierungen enthalten, eignen.

Demgemäß wurden die eingangs definierten oligomeren Carbodiimide gefunden.

Weiterhin wurden Verfahren zur Herstellung dieser oligomeren Carbodiimide sowie mit diesen Verbindungen stabilisierten hydrolyseempfindlichen Estern und Polymeren gefunden. Außerdem wurde gefunden, daß Veresterungsreaktionen bei Erreichen des gewünschten Umsatzes mittels der erfindungsgemäßen oligomeren Carbodiimide wirkungsvoll abgebrochen werden können.

Die den oligomeren Carbodiimiden zugrundeliegenden Diisocyanate (a)

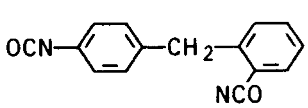

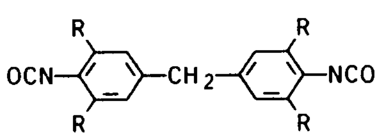

R = $C_1$-$C_4$-Alkyl

sind größtenteils bekannt und können aus den entsprechenden Aminen durch Umsetzung mit Phosgen hergestellt werden. Die Herstellungsmethoden werden z.B. im Kunststoff-Handbuch, Band 7, "Polyurethane", 2. Auflage (1983), Hanser-Verlag, auf Seite 63 bis 69 beschrieben.

Bevorzugt werden solche oligomeren Carbodiimide, welche aus den Verbindungen (a) allein aufgebaut sind. Jedoch haben auch Cooligomere mit bis zu 60 mol-%, vorzugsweise mit bis zu 30 mol-% anderen zwei- oder mehrfunktionellen aromatischen Isocyanaten (b) noch gute anwendungstechnische Eigenschaften.

Als Isocyanate (b) kommen vornehmlich zweikernige Verbindungen wie 4,4'-Diisocyanatodiphenylmethan oder Naphthalin-1,5-diisocyanat sowie mehrkernige, höherfunktionelle Isocyanate, wie sie bei der Herstellung von 4,4'-Diisocyanatodiphenylmethan anfallen, in Betracht. Der Anteil dieser höherfunktionellen Isocyanate liegt bevorzugt im Bereich von 0,5 bis 5 Gew.-%, bezogen auf die Mischung von (a) und (b).

Bevorzugt werden oligomere Carbodiimide des mittleren Kondensationsgrades 2 bis 10, da diese sich in aller Regel besonders gut in die zu stabilisierenden Massen einarbeiten lassen. Höherkondensierte Carbodiimide sind in der Regel fest und hochschmelzend und lassen sich daher weniger einfach mit den polymeren Massen homogen vermischen.

Da die oligomere Carbodiimide aus den Komponenten (a) und (b) noch freie Isocyanatgruppen tragen, sind sie nur bedingt lagerfähig und müssen daher schnell ihrem Verwendungszweck zugeführt werden. Bevorzugt werden deshalb im allgemeinen solche erfindungsgemäßen Verbindungen, deren Isocyanatgruppen mit einem Alkohol oder Amin (c) unter Bildung von Urethan- bzw. Harnstoffgruppen abgesättigt sind.

Auf die chemische Natur der Alkohole und Amine (c) kommt es hierbei weniger an, sofern sie keine reaktiven Gruppen wie beispielsweise Carboxylgruppen enthalten, was sich allerdings von selbst versteht. Allgemein werden Alkohole bevorzugt, und zwar $C_1$- bis $C_{18}$-Alkohole wie Methanol, Ethanol, Propanol, Butanol, Isopropanol, 2-Ethylhexanol und Dodekanol, wobei vor allem $C_2$- bis $C_8$-Alkanole in Betracht kommen.

Amine, vorzugsweise sekundäre Dialkylamine mit insgesamt 2 bis 12 C-Atomen, wie Diethylamin, Dipropylamin und Dibutylamin sind zwar auch geeignet, haben aber den Nachteil eines meist unangenehmen Geruchs, der die technisch aufwendige Entfernung von nicht umgesetzten Restmengen erforderlich macht.

Man kann die Oligokondensation der Isocyanate (a) und (b) bei 50 bis 200 °C durchführen. Entsprechende Verfahren werden von W. Neumann und P. Fischer, Angew. Chemie 74, 801 (1962) beschrieben, wobei sich die Mitverwendung von Katalysatoren empfiehlt. Als Katalysatoren besonders geeignet sind Phospholenoxide. Sterisch wenig gehinderte Isocyanate wie 4,4'-Diisocyanatodiphenylmethan lassen sich bei Temperaturen unterhalb von 100 °C umsetzen, vorzugsweise bei 40 bis 100 °C. Sterisch gehinderte Isocyanate wie 3,3',5,5'-Tetraisopropyl-4,4'-diisocyanatodiphenylmethan werden bevorzugt bei Temperaturen im Bereich von 100 °C bis 180 °C umgesetzt.

Durch die Wahl der Reaktionsbedingungen wie der Temperatur, der Katalysatorart und der Katalysatormenge sowie der Reaktionszeit kann der Fachmann in der üblichen Weise den Kondensationsgrad einstellen. Der Verlauf der Reaktion kann am einfachsten durch Bestimmung des NCO-Gehaltes verfolgt werden. Auch andere Parameter wie Viskositätsanstieg, Farbvertiefung oder $CO_2$-Entwicklung kann man für den Ablauf und die Steuerung der Reaktion heranziehen.

Nach beendeter Kondensation setzt man, wie es sich aus den vorstehend genannten Gründen meistens empfiehlt, die freien Isocyanatgruppen mit einem Alkohol oder Amin um, indem man diese Komponente vorzugsweise in einem geringen überschuß zum Kondensationsprodukt gibt, reagieren läßt und die Restmenge danach unter vermindertem Druck abdestilliert.

In einer bevorzugten Ausführungsform kann man die erfindungsgemäßen Carbodiimide in der Weise herstellen, daß man zunächst bis zu 60 %, vorzugsweise bis 40 % der Isocyanatgruppen von (a) und/oder (b) mit einem Alkohol oder Amin (c) umsetzt und danach die Kondensationsreaktion vornimmt. Diese Methode läßt sich mit Erfolg besonders im Falle von solchen Diisocyanaten anwenden, deren Isocyanatgruppen von unterschiedlicher Reaktivität sind, weil hier die weniger erwünschte Umsetzung beider Isocyanatgruppen ein und desselben Moleküls kaum eintritt.

Da nach diesem Verfahren bei der Kondensation bereits monofunktionelle kettenabbrechende Verbindungen vorliegen, gestattet es die Einstellung eines relativ einheitlichen Kondensationsgrades. Beträgt die Menge des Alkohols oder Amins beispielsweise 20 mol-%, bezogen auf die Menge aller Isocyanatgruppen, so errechnet sich hiervon ein mittlerer Kondensationsgrad von 5, der nach den bisherigen Beobachtungen auch etwa dem tatsächlich Kondensationsgrad entspricht. Im Falle von 50 mol-% erhält man theoretisch Dimere, und bei Alkohol- bzw. Aminmengen von über 50 mol-% fallen neben dimeren Carbodiimiden auch die entsprechenden Bisurethane bzw. Bisharnstoffe der eingesetzten Diisocyanate an, die zwar nicht die an sich erwünschte Diimidfunktion aufweisen, aber die Einarbeitung der Carbodiimide in die plastischen Massen erleichtern.

Die erfindungsgemäßen oligomeren Carbodiimide eignen sich hervorragend als Säurefänger und damit als Stabilisatoren gegen den hydrolytischen Abbau von Estern. Vorzüglich sind sie als Stabilisatoren für polyesterhaltige Kunststoffe wie Polyesterurethankautschuke und insbesondere als Stabilisatoren gegen den hydrolytischen Abbau von estergruppenhaltigen polymeren Polyadditions- oder Polykondensationsprodukten geeignet.

Die erfindungsgemäßen oligomeren Carbodiimide weisen eine Langzeitwirkung auf, die vermutlich darauf zurückzuführen ist, daß die Carbodiimidgruppierungen gegen Wasser verhältnismäßig unempfindlich sind, von Wasser also nicht vorzeitig desaktiviert werden und deshalb längere Zeit zur Verfügung stehen, um mit Säurespuren, die den Abbau der Esterbindungen katalysieren, zu reagieren.

Die Konzentration der oligomeren Carbodiimide in den zu stabilisierenden Massen beträgt im allgemeinen 0,1 bis 2 Gew.-%. In Einzelfällen kann, je nach hydrolytischer Beanspruchung, die Konzentration auch höher, etwa bis 5 Gew.-%, sein.

Die erfindungsgemäßen oligomeren Carbodiimide sind auch zur Entsäuerung von Polyesterolen geeignet, welche zur Herstellung von polyesterhaltigen Kunststoffen, insbesondere Polyesterurethankautschuken, verwendet werden.

Eine weitere wichtige Anwendung liegt im Abbruch von Veresterungsreaktionen, vor allem bei der Herstellung von Polyestern, wenn der gewünschte Polykondensationsgrad erreicht ist.

Die erfindungsgemäßen oligomeren Carbodiimide bieten ferner den Vorteil, daß sie mit Polyesterolen und mit Estergruppierungen enthaltenden Polymeren, insbesondere mit Polyesterurethankautschuken, gut verträglich sind und aufgrund ihres niedrigen Schmelzpunktes auch problemlos mit diesen Materialien in der Schmelze homogen mischbar sind. Von Vorteil ist auch, daß die erfindungsgemäßen Oligocarbodiimide nicht zum Ausblühen neigen.

## Beispiele

### A) Herstellung der oligomeren Carbodiimide

#### Beispiel 1 (Vergleichsbeispiel)

250 g (1 mol) 4,4'-Diisocyanatodiphenylmethan (4,4'-MDI) wurde bei 80 °C unter Zusatz von 500 ppm 1-Methylphospholen-(1)-oxid umgesetzt, bis der NCO-Gehalt bei 60 % des Ausgangswertes lag. Anschließend wurde der Katalysator bei 180 °C und 0,1 mbar durch Destillation entfernt.

Der NCO-Gehalt des Produktes betrug 13,5 Gew.-% (40 % des Ausgangswertes). Das Produkt schmilzt zwischen 70 und 120 °C. Aus dem Umsatz der NCO-Gruppen errechnet sich ein durchschnittlicher Kondensationsgrad von 2,5.

#### Beispiel 2

250 g (1 mol) 2,4'-Diisocyanatodiphenylmethan (2,4'-MDI) wurde entsprechend Beispiel 1 umgesetzt.

Der NCO-Gehalt des Produktes nach Abdestillieren des Katalysators betrug 12 Gew.-% (36 % des Ausgangswertes).

Das Produkt schmilzt zwischen 60 und 100 °C. Aus dem Umsatz der NCO-Gruppen errechnet sich ein durchschnittlicher Kondensationsgrad von 2,8.

#### Beispiel 3

362 g (1 mol) 3,3',5,5'-Tetraethyl-4,4'-diisocyanatodiphenylmethan (TE-MDI) wurden entsprechend Beispiel 1 bei 130 °C umgesetzt.

Der NCO-Gehalt des Produktes nach Abdestillieren des Katalysators betrug 7,4 Gew.-% (32 % des Ausgangswertes).

Das Produkt schmilzt zwischen 100 und 150 °C. Aus dem Umsatz der NCO-Gruppen errechnet sich ein durchschnittlicher Kondensationsgrad von 3,1.

#### Beispiel 4

418 g (1 mol) 3,3',5,5'-Tetraisopropyl-4,4'-diisocyanato-diphenylmethan (TIP-MDI) wurden entsprechend Beispiel 1 bei 140 °C umgesetzt.

Der NCO-Gehalt des polymeren Produktes nach Abdestillieren des Katalysators betrug 8,0 Gew.-% (40 % des Ausgangswertes).

Das Produkt schmilzt zwischen 100 und 150 °C. Aus dem Umsatz der NCO-Gruppen errechnet sich ein durchschnittlicher Kondensationsgrad von 2,5.

Beispiel 5 (Vergleichsbeispiel)

250 g (1 mol) 4,4'-Diisocyanatodiphenylmethan wurde bei 80 °C unter Zusatz von 500 ppm 1-Methylphospholen-(1)-oxid umgesetzt, bis der NCO-Gehalt auf 12,5 Gew.-% (37 % des Ausgangswertes) gefallen war. Dann wurden 41,4 g (0,9 mol) Ethanol zugegeben. Nach 30 Minuten wurde der Katalysator und der überschüssige Alkohol bei 180 °C und 0,1 mbar abdestilliert.

Aus dem Umsatz der NCO-Gruppen errechnet sich ein durchschnittlicher Kondensationsgrad von 2,7.

Das Produkt schmilzt zwischen 80 und 120 °C. Es ist in Polyurethankautschuk und Polyesterolen löslich.

Beispiel 6

250 g (1 mol) 4,4'-Diisocyanatodiphenylmethan wurde analog Beispiel 5 unter Zugabe von 0,9 mol (117 g) 2-Ethylhexanol umgesetzt.

Das Produkt schmilzt zwischen 70 und 100 °C. Es ist in Polyurethankautschuk und Polyesterolen löslich. Der errechnete Kondensationsgrad beträgt 2,7.

Beispiel 7

250 g (1 mol) 2,4'-Diisocyantodiphenylmethan wurde analog Beispiel 5 umgesetzt.

Das Produkt schmilzt zwischen 60 und 90 °C. Es ist in Polyurethankautschuk und Polyesterolen löslich. Der errechnete Kondensationsgrad beträgt 2,7.

Beispiel 8

250 g (1 mol) 2,4'-Diisocyanatodiphenylmethan wurde analog Beispiel 5 unter Zugabe von 0,9 mol (117 g) 2-Ethylhexanol umgesetzt.

Das Produkt schmilzt zwischen 50 und 90 °C. Es ist in Polyurethankautschuk und Polyesterolen löslich. Der errechnete Kondensationsgrad beträgt 2,7.

Beispiel 9

Eine Mischung aus jeweils 125 g (0,5 mol) 2,4'- und 4,4'-Diisocyanatodiphenylmethanwurde analog Beispiel 5 unter Zugabe von 0,9 mol (117 g) 2-Ethylhexanol umgesetzt.

Das Produkt schmilzt zwischen 60 und 90 °C. Es ist in Polyurethankautschuk und Polyesterolen löslich. Der errechnete Kondensationsgrad beträgt 2,7.

Beispiel 10

362 g (1 mol) 3,3',5,5'-Tetraethyl-4,4'-diisocyanatodiphenylmethan wurde analog Beispiel 5 umgesetzt.

Das Produkt schmilzt zwischen 90 und 130 °C. Es ist in Polyurethankautschuk und Polyesterolen löslich. Der errechnete Kondensationsgrad beträgt 2,7.

Beispiel 11

362 g (1 mol) 3,3',5,5'-Tetraethyl-4,4'-diisocyanatodiphenylmethan wurde analog Beispiel 5 unter Zugabe von 0,9 mol (117 g) 2-Ethylhexanol umgesetzt.

Das Produkt schmilzt zwischen 70 und 110 °C. Es ist in Polyurethankautschuk und Polyesterolen löslich. Der errechnete Kondensationsgrad beträgt 2,7.

Beispiel 12

418 g (1 mol) 3,3',5,5'-Tetraisopropyl-4,4'-diisocyanatodiphenylmethan wurde analog Beispiel 5 umgesetzt.

Das Produkt schmilzt zwischen 100 und 140 °C. Es ist in Polyurethankautschuk und Polyesterolen löslich. Der errechnete Kondensationsgrad beträgt 2,7.

Beispiel 13

418 g (1 mol) 3,3',5,5'-Tetraisopropyl-4,4'-diisocyanatodiphenylmethan wurde analog Beispiel 5 unter Zugabe von 0,9 mol (117 g) 2-Ethylhexanol umgesetzt.

Das Produkt schmilzt zwischen 90 und 130 °C. Es ist in Polyurethankautschuk und Polyesterolen löslich. Der errechnete Kondensationsgrad beträgt 2,7.

B) Anwendungstechnische Eigenschaften

Rechteckige Prüfplatten (200 mm x 100 mm x 15 mm) aus einem thermoplastischen Polyesterpolyurethan, das aus 430 g (1,72 mol) 4,4'-Diisocyanatodiphenylmethan, 1000 g (0,5 mol) Butyl-Hexamethyladipat (Molekulargewicht 2000) und 110 g (1,72 mol) Butan-1,4-diol aufgebaut war, wurden über einen Zeitraum von 16 Tagen bei 95 °C in Wasser gelagert. Die Härte betrug 85 Shore A. Es wurde jeweils 1 Gew.-% des entsprechenden Carbodiimids in das Polyurethan eingearbeitet.

Gemessen wurden die K-Werte (Lösungsviskosität, 0,5 Gew.-% in DMF, nach DIN 53 726) vor Beginn der Tests sowie nach 8 und 16 Tagen.

Da die K-Werte mit dem Molekulargewicht korrelieren bedeutet eine Abnahme, daß der thermoplastische Polyurethankautschuk während der Versuchsdauer hydrolytisch abgebaut wird.

Die Einzelheiten dieser Versuche sind der nachfolgenden Tabelle zu entnehmen. Versuch Nr. 14 wurde ohne Zugabe von Carbodiimid durchgeführt.

Tabelle

| Versuch Nr. | Beispiel Nr. | oligomeres Carbodiimid auf Basis von Diisocyanat | Alkohol | K-Wert zu Beginn | nach 8 Tagen | nach 16 Tagen |
|---|---|---|---|---|---|---|
| erfindungsgemäß | | | | | | |
| 1 | 2 | 2,4'-MDI | - | 71 | 57 | 38 |
| 2 | 3 | TE-MDI | - | 71 | 62 | 49 |
| 3 | 4 | TIP-MDI | - | 71 | 60 | 51 |
| 4 | 7 | 2,4'-MDI | Ethanol | 71 | 62 | 39 |
| 5 | 8 | 2,4'-MDI | 2-Ethylhexanol | 71 | 61 | 40 |
| 6 | 9 | 2,4'-/4,4'-MDI | 2-Ethylhexanol | 71 | 57 | 31 |
| 7 | 10 | TE-MDI | Ethanol | 71 | 64 | 42 |
| 8 | 11 | TE-MDI | 2-Ethylhexanol | 71 | 65 | 59 |
| 9 | 12 | TIP-MDI | Ethanol | 71 | 66 | 58 |
| 10 | 13 | TIP-MDI | 2-Ethylhexanol | 71 | 65 | 60 |
| Zum Vergleich | | | | | | |
| 11 | 1 | 4,4'-MDI | - | 71 | 53 | 34 |
| 12 | 5 | 4,4'-MDI | Ethanol | 71 | 50 | 23 |
| 13 | 6 | 4,4'-MDI | 2-Ethylhexanol | 71 | 51 | 19 |
| 14 | - | keine Carbodiimidzugabe | | 71 | 42 | 19 |

Versuch 15

800 g eines Polyesterols aus Butan-1,4-diol, Hexan-1,6-diol und Adipinsäure mit einem Molgewicht von etwa 2000 und einer Säurezahl von 0,35 mg KOH/g wurden 30 Minuten bei 180 ° C mit 4 g des oligomeren Carbodiimids gemäß Beispiel Nr. 13 behandelt, wobei sich die Säurezahl auf 0,026 mg KOH/g verminderte.

Ein thermoplastischer Polyurethankautschuk auf Basis dieses Polyesterdiols büßte innerhalb von 5 Tagen durch den Hydrolysetest (Wasser, 95 ° C) 17 % seiner Zugfestigkeit ein.

Wurde das nicht vorbehandelte Polyesterol zur Herstellung der Prüfplatte verwendet, so büßte die Prüfplatte innerhalb von 5 Tagen durch den Hydrolysetest mehr als 90 % ihrer Zugfestigkeit ein.

Versuch 16

800 g eines Polyesterols aus Butan-1,4-diol, Hexan-1,6-diol und Adipinsäure mit einem Molgewicht von etwa 2000 und einer Säurezahl von 0,35 mg KOH/g wurde 30 Minuten bei 180 ° C mit 8 g eines oligomeren Carbodiimids gemäß Beispiel Nr. 9 behandelt, wobei sich die Säurezahl auf 0,035 mg KOH/g verminderte.

Ein thermoplastischer Polyurethankautschuk auf Basis dieses Polyesterols büßte innerhalb von 5 Tagen durch den Hydrolysetest (Wasser, 95 ° C) 26 % seiner Zugfestigkeit ein.

Wurde das nicht vorbehandelte Polyesterol zur Herstellung der Prüfplatte verwendet, so büßte die Prüfplatte innerhalb von 5 Tagen durch den Hydrolysetest mehr als 90 % ihrer Zugfestigkeit ein.

Versuch 17

Bei der Herstellung eines Polyesterols aus Butan-1,4-diol, Hexan-1,6-diol und Adipinsäure wurde die Veresterung nicht bis zur gewohnten Säurezahl von 0,3 mg KOH/g durchgeführt, sondern bei der Säurezahl 0,5 mg KOH/g durch Zugabe von 0,6 Gew.-% des Carbodiimids gemäß Beispiel Nr. 13 abgebrochen.

Hierbei verringerte sich die Herstellzeit des Esters von 12 Stunden (ohne Abbruch der Reaktion) auf 10 Stunden.

Das Polyesterol hatte eine Säurezahl von 0,045 mg KOH/g. Anwendungstechnisch konnten keine Unterschiede zu herkömmlich hergestellten und anschließend säurereduzierten Polyesterolen (Versuch 15 und 16) festgestellt werden.

**Patentansprüche**

**1.** Oligomere Carbodiimide des mittleren Kondensationsgrades 2 bis 30, erhältlich durch Oligokondensation von
   a) 40 bis 100 mol-% 2,4'-Diisocyanatodiphenylmethan oder eines 3,3',5,5'-Tetra-$C_1$-$C_4$-alkyl-4,4'-diisocyanatodiphenylmethans und
   b) 0 bis 60 mol-% eines weiteren zwei- oder mehrfunktionellen aromatischen Isocyanates und
   c) gewünschtenfalls vollständige oder teilweise Umsetzung der noch freien Isocyanatgruppen der Oligomeren mit einem aliphatischen, araliphatischen oder cycloaliphatischen Alkohol oder Amin.

**2.** Oligomere Carbodiimide nach Anspruch 1, erhältlich aus praktisch 100 mol-% der Komponente (a).

**3.** Oligomere Carbodiimide nach Anspruch 1 oder 2, erhältlich durch Umsetzung der noch freien Isocyanatgruppen des Oligomeren aus den Komponenten (a) und/oder (b) mit einem $C_1$-$C_{12}$-Alkanol als Komponente (c).

**4.** Oligomere Carbodiimide nach den Ansprüchen 1 bis 3 mit einem mittleren Kondensationsgrad von 2 bis 10.

**5.** Verfahren zur Herstellung von oligomeren Carbodiimiden durch Kondensation von zwei- oder mehrwertigen aromatischen Isocyanaten, dadurch gekennzeichnet, daß man hierbei von
   a) 40 bis 100 mol-% 2,4'-Diisocyanatodiphenylmethan oder eines 3,3',5,5'-Tetra-$C_1$-$C_4$-alkyl-4,4'-diisocyanatodiphenylmethans und
   b) 0 bis 60 mol-% eines weiteren zwei- oder mehrfunktionellen aromatischen Isocyanates ausgeht und
   c) die freien Isocyanatgruppen der erhaltenen Oligomeren gewünschtenfalls vollständig oder teilweise mit einem aliphatischen, araliphatischen oder cycloaliphatischen Alkohol oder Amin umsetzt, oder

daß man zunächst
vor der Kondensation bis zu 60 % der Isocyanatgruppen der Komponente (a) und/oder (b) mit der Komponente (c) umsetzt, danach die Kondensation vornimmt und gewünschtenfalls anschließend die restlichen noch freien Isocyanatgruppen der Oligomeren mit der Komponenten (c) umsetzt.

**6.** Verfahren nach Anspruch 5, dadurch gekennzeichnet, daß man die Kondensation in Gegenwart eines Phospholenoxids vornimmt.

**7.** Hydrolyseempfindliche Substanzen, enthaltend oligomere Carbodiimide gemäß den Ansprüchen 1 bis 6 als Stabilisatoren gegen hydrolytischen Abbau.

**8.** Estergruppenhaltige Polymere, enthaltend oligomere Carbodiimide gemäß den Ansprüchen 1 bis 6 als Stabilisatoren gegen hydrolytischen Abbau.

**9.** Verfahren zur Herstellung von Mono-, Oligo- oder Polyestern durch Umsetzung der entsprechenden Säuren oder Säurederivate mit Alkoholen, dadurch gekennzeichnet, daß man die Veresterungsreaktion nach Erreichen des gewünschten Umsatzes durch Zusatz von oligomeren Carbodiimiden gemäß den Ansprüchen 1 bis 6 abbricht.

**10.** Verwendung der oligomeren Carbodiimide gemäß den Ansprüchen 1 bis 6 zur Entfernung von Wasser und/oder Spuren von Säure aus nieder- oder hochmolekularen Verbindungen.